# EUROPÄISCHE PATENTSCHRIFT

(11) **EP 3 575 899 B1**
(45) Veröffentlichungstag und Bekanntmachung des Hinweises auf die Patenterteilung: **17.03.2021**
(21) Anmeldenummer: 18175556.2
(22) Anmeldetag: 01.06.2018
(51) Int. Cl.: G05B 19/042, G05B 19/05, H04L 12/46, G05B 19/418

(54) **AUTOMATISIERUNGSSYSTEM, BETRIEBSVERFAHREN FÜR AUTOMATISIERUNGSSYSTEM UND COMPUTERPROGRAMMPRODUKT**
AUTOMATION SYSTEM, OPERATING METHOD FOR AUTOMATION SYSTEM AND COMPUTER PROGRAM PRODUCT
SYSTÈME D'AUTOMATISATION, PROCÉDÉ DE FONCTIONNEMENT POUR SYSTÈME D'AUTOMATISATION ET PRODUIT DE PROGRAMME INFORMATIQUE

(43) Veröffentlichungstag der Anmeldung: 04.12.2019
(73) Patentinhaber: Selectron Systems AG, 3250 Lyss (CH)
(72) Erfinder: SCHÖNI, Ulrich, 3063 Ittigen (CH)
(74) Vertreter: Prüfer & Partner mbB Patentanwälte · Rechtsanwälte

(56) Entgegenhaltungen:
- EP-A1- 2 661 023
- DE-A1-102011 082 965
- DE-A1-102012 220 396
- DE-A1-102014 226 994
- DE-A1-102015 105 929

## Beschreibung

Die vorliegende Erfindung betrifft ein Automatisierungssystem, ein Betriebsverfahren für ein Automatisierungssystem und ein Computerprogrammprodukt und betrifft insbesondere ein Automatisierungssystem, ein Verfahren und ein Computerprogrammprodukt zur Kommunikation zwischen über einen Rückwandbus miteinander verbundenen Baugruppen eines Automatisierungssystems, wobei die Baugruppen direkt miteinander Daten austauschen können, ohne die Daten über einen Master zu verschicken.

Im Stand der Technik ist ein Automatisierungssystem, beispielsweise zur automatischen Steuerung von Funktionen eines Schienenfahrzeugverbundes, insbesondere zu dessen Steuerung und Verwaltung (im Folgenden "TCMS", Train Control & Management System) bekannt, das aus mehreren Baugruppen modular aufgebaut ist. Hierbei werden üblicherweise mehrere Baugruppen in einem gemeinsamen Gehäuse angebracht. Sollen diese Baugruppen untereinander kommunizieren, ist üblicherweise das Gehäuse mit einer elektronischen, mit Schnittstellen versehenen Leiterplatte (auch "Backplane") ausgestattet, die so ausgeführt ist, dass die Schnittstellen mit den Baugruppen verbunden werden, wenn die Baugruppen in das Gehäuse eingesetzt werden.

Über die Schnittstellen können die Baugruppen in unterschiedlicher Form verbunden werden. Bei einer sternförmigen Leitungsführung führen die Verbindungen der Schnittstellen für mehrere gleichartige Baugruppen für sich gesondert zu der Schnittstelle einer zentralen Baugruppe. Die jeweiligen Baugruppen können dann bereits physikalisch nicht direkt untereinander sondern nur direkt mit der zentralen Baugruppe kommunizieren. Kommunikation unter den Baugruppen erfolgt über die zentrale Baugruppe als Relais.

Teilen sich die Schnittstellen ein Kommunikationsmedium, d.h. alle Schnittstellen sind über die gleichen oder durchgängige Leiterbahnen verbunden, stellen sie einen Bus ("Rückwandbus" oder auch "Backplane Bus") dar. Da es zu Übertragungsstörungen oder gar Beschädigung der angeschlossenen Baugruppen führen kann, wenn mehrere Baugruppen gleichzeitig sendend auf den Bus zuzugreifen, müssen in diesem Fall im verwendeten Kommunikationsprotokoll Mechanismen zur Buszugangsarbitrierung vorgesehen werden, um zu regeln, welcher am Bus angeschlossener Kommunikationsteilnehmer Zugang zum Kommunikationsmedium erhält, wenn mehrere Kommunikationsteilnehmer zeitgleich auf den Bus zugreifen wollen. Zur Kommunikation über die sternförmige Leitungsführung oder den Rückwandbus sind verschiedene Kommunikationsprotokolle wie CAN-Bus nach ISO 11898, Ethernet nach IEEE 802.3, RS-232 nach ANSI/EIA/TIA-232-F/RS-422 nach ANSI/EIA/TIA-422-B-1994/RS-485 nach ANSI/EIA/TIA-485, USB, PCI und weitere bekannt.

Alternativ sind Automatisierungssysteme bekannt, bei denen die Rückwandbusfunktionalität nicht über eine entsprechend gestaltete Leiterplatte bereitgestellt wird, sondern bei denen die Baugruppen über ein- oder mehradrige flexible Kabel miteinander verbunden werden. Insbesondere in diesen Automatisierungssystemen ist es nicht erforderlich, dass alle Baugruppen in einem gemeinsamen Gehäuse untergebracht sind, sondern an unterschiedlichen Stellen des Schienenfahrzeugs angeordnet werden können.

Im Stand der Technik werden üblicherweise Automatisierungssysteme mit sternförmiger Leitungsführung oder insbesondere mit Rückwandbus unter Verwendung des CAN-Buskommunikationsprotokolls eingesetzt. Hierbei ist das Automatisierungssystem so aufgebaut, dass eine Baugruppe als übergeordnete Baugruppe (Master) die Kommunikation unter den Baugruppen steuert. Dieses Automatisierungssystem erlaubt eine Abschottung der Kommunikation zwischen einzelnen Baugruppen vor anderen Baugruppen, sodass Baugruppen mit Fehlfunktion nicht unberechtigt in Kommunikation zwischen anderen Baugruppen eingreifen können.

Das Automatisierungssystem aus dem Stand der Technik weist das Problem auf, dass die übergeordnete Baugruppe an jedem Kommunikationsvorgang beteiligt ist, was zu einer Überlastung der übergeordneten Baugruppe führt, und bei deren Ausfall ohne das Vorsehen von Redundanzen zum Ausfall des Automatisierungssystems führt.

Ferner ist es in dem bekannten Automatisierungssystem nicht möglich, Baugruppen mit weiteren Kommunikationsschnittstellen für externe Systeme vorzusehen, sodass Daten über Schnittstellen unterschiedlicher Baugruppen zwischen den externen Systemen übertragen oder weitergeleitet werden können.

Die Druckschrift DE 10 2015 105 929 A1 offenbart ein Automatisierungsgerät zum redundanten Steuern eines Busteilnehmers mittels einer ersten Steuerung und einer zweiten Steuerung mit einer Busschnittstelle zur Kommunikation mit dem Busteilnehmer, einer ersten Kommunikationsschnittstelle zur Kommunikation mit der ersten Steuerung über ein erstes Kommunikationsnetzwerk, einer zweiten Kommunikationsschnittstelle zur Kommunikation mit der zweiten Steuerung über ein zweites Kommunikationsnetzwerk; und einem Prozessor, wobei der Prozessor ausgebildet ist, von der Busschnittstelle empfangene Busdaten an die erste Kommunikationsschnittstelle und an die zweite Kommunikationsschnittstelle auszusenden. Dabei ist die erste Kommunikationsschnittstelle ausgebildet, die empfangenen Busdaten an die erste Steuerung auszusenden, und die zweite Kommunikationsschnittstelle ist ausgebildet, die empfangenen Busdaten an die zweite Steuerung auszusenden. Die erste Kommunikationsschnittstelle und die zweite Kommunikationsschnittstelle sind kommunikationstechnisch voneinander getrennt, und der Prozessor ist ausgebildet, über die erste Kommunikationsschnittstelle empfangene erste Kommunikationsdaten und über die zweite Kommunikationsschnittstelle empfangene zweite Kommunikationsdaten über die Busschnittstelle an den Busteilnehmer auszusenden.

Die Druckschrift EP 2 661 023 A1 offenbart ein Kommunikationsgerät für ein redundant betreibbares industrielles Kommunikationsnetz. Es umfasst eine erste und eine zweite Sende- und Empfangseinheit, die Datenpakete innerhalb eines industriellen Kommunikationsnetzes wahlweise stoßbehaftet oder stoßfrei übermittelt und selektiv in einen stoßbehafteten oder stoßfreien Übermittlungsmodus umschaltbar sind. Offenbart wird ferner, dass eine besondere unproblematische Umsetzung sich ergebe, wenn stoßfrei zu übermittelnde Datenpakete jeweils ein VLAN-Tag mit Priorität 6 entsprechend Standard IEEE 802.1Q zugeordnet ist DE102012220396 A1 offenbart ein System und ein Verfahren zum Warten von Werkzeugmaschinen und Maschinensteuerungen, wobei VLAN-tagging-fähigen Datennetzweiche eine sichere Datenübertragung zwischen einem Servicecomputer und Datenverarbeitungsanlagen eines Maschinenherstellers ermöglichen.

Der vorliegenden Erfindung liegt daher die Aufgabe zugrunde ein Verfahren bereitzustellen, das eine direkte Kommunikation zwischen den Baugruppen, zwischen einer Baugruppe und einem externen System, oder zwischen den externen Systemen ermöglicht, oder den Master zu entlastet.

Diese Aufgabe wird durch ein Automatisierungssystem nach Anspruch 1, ein Betriebsverfahren für ein Automatisierungssystem nach Anspruch 5 sowie ein Computerprogrammprodukt nach Anspruch 9 gelöst. Weitere vorteilhafte Entwicklungen der Erfindung sind Gegenstand der abhängigen Ansprüche.

Offenbart ist ein Automatisierungssystem, das aufweist: einen Rückwandbus eine erste Baugruppe wobei die erste Baugruppe aufweist: eine erste Steuereinheit, die eingerichtet ist, die erste Baugruppe zu steuern und zu überwachen und für das Automatisierungssystem 1 die Funktion einer übergeordneten Steuereinheit zu übernehmen, eine erste Kommunikationsschnittstelle, die mit einem ersten Segment eines Zugsteuerungs- und Verwaltungssystem-Netz verbindbar ist, eine zweite Kommunikationsschnittstelle, die mit dem Rückwandbus verbunden ist, eine erste Netzweiche, die die erste Kommunikationsschnittstelle, die zweite Kommunikationsschnittstelle und die Steuereinheit so miteinander verbindet, dass Datenkommunikation gemäß Ethernet-Protokoll erfolgen kann, eine zweite Baugruppe wobei die zweite Baugruppe aufweist: eine zweite Steuereinheit, die eingerichtet ist, die zweite Baugruppe zu steuern und zu überwachen, eine dritte Kommunikationsschnittstelle, die mit einem zweiten Segment des Zugsteuerungs- und Verwaltungssystem-Netzes des Zugsteuerungs- und Verwaltungssystem-Netzes verbunden ist, eine vierte Kommunikationsschnittstelle, die mit dem Rückwandbus verbunden ist, eine zweite Netzweiche, die die dritte Kommunikationsschnittstelle, die vierte Kommunikationsschnittstelle und die zweite Steuereinheit so miteinander verbindet, dass Datenkommunikation gemäß Ethernet-Protokoll erfolgt, wobei die erste Netzweiche und die zweite Netzweiche eingerichtet sind, ein einfach markiertes VLAN nach IEEE 802.1Q zu etablieren und zu verarbeiten und ein zweifach markiertes VLAN nach IEEE 802.1ad zu bilden und zu verarbeiten, das Zugsteuerungs- und Verwaltungs-Netz ein nach IEEE 802.1Q erstes einfach markiertes VLAN (V1) bildet, an das die Steuereinheit als Endeinrichtung des Zugsteuerungs- und Verwaltungs-Netzes angeschlossen ist, zwischen der ersten Steuereinheit und der zweiten Steuereinheit über den Rückwandbus ein nach IEEE 802.1Q einfach markiertes VLAN (V3) etabliert ist, über das die Steuereinheit mit der Steuereinheit kommunizieren und diese steuern kann, und zwischen der ersten Netzweiche und der zweiten Netzweiche über den Rückwandbus ein nach IEEE 802.1ad erstes zweifach markiertes VLAN (T1) etabliert ist.

Das offenbarte Automatisierungssystem erlaubt mehreren Baugruppen am Rückwandbus miteinander zu kommunizieren, ohne dass Daten über eine zentrale Stelle (Master) geführt werden müssen, wodurch die Arbeitslast der zentralen Stelle sinkt.

Offenbart ist ferner vorzugsweise ein Automatisierungssystem, wobei das erste Segment des Zugsteuerungs- und Verwaltungssystem-Netzes aus einer einzelnen Endeinrichtung des Zugsteuerungs- und Verwaltungssystem-Netzes besteht oder aus einem Teilnetz, über das mehrere Endeinrichtungen des Zugsteuerungs- und Verwaltungssystem-Netzes angeschlossen sind, und das zweite Segment des Zugsteuerungs- und Verwaltungssystem-Netzes aus einer einzelnen Endeinrichtung des Zugsteuerungs- und Verwaltungssystem-Netzes besteht oder aus einem Teilnetz, über das mehrere Endeinrichtungen des Zugsteuerungs- und Verwaltungssystem-Netzes angeschlossen sind.

Offenbart ist ferner vorzugsweise, dass bei dem Automatisierungssystem die erste Baugruppe ferner aufweist: eine fünfte Kommunikationsschnittstelle, die mit einem ersten Segment eines Kommunikationsnetzes verbunden ist, das ein nach IEEE 802.1Q zweites einfach markiertes VLAN (V2) bildet, an das die Steuereinheit als Endeinrichtung angeschlossen ist, und das Automatisierungssystem eine dritte Baugruppe aufweist, wobei die dritte Baugruppe aufweist: eine dritte Steuereinheit, die eingerichtet ist, die dritte Baugruppe zu steuern und zu überwachen, eine sechste Kommunikationsschnittstelle, die mit einem ersten Segment des Kommunikationsnetzes verbunden ist, eine siebte Kommunikationsschnittstelle, die mit dem Rückwandbus verbunden ist, eine dritte Netzweiche, die die sechste Kommunikationsschnittstelle, die siebte Kommunikationsschnittstelle und die dritte Steuereinheit so miteinander verbindet, dass Datenkommunikation gemäß Ethernet-Protokoll erfolgen kann, wobei zwischen der ersten Steuereinheit und der dritten Steuereinheit über den Rückwandbus das nach IEEE 802.1Q einfach markiertes VLAN (V3) etabliert ist, über das die erste Steuereinheit mit der dritten Steuereinheit kommunizieren und diese steuern kann, und zwischen der ersten Netzweiche und der dritten Netzweiche über den Rückwandbus ein nach IEEE 802.1ad zweites zweifach markiertes VLAN (T2) etabliert ist.

Offenbart ist ferner vorzugsweise ein Automatisierungssystem, wobei: das erste Segment des Kommunikationsnetzes aus einer einzelnen Endeinrichtung des Kommunikationsnetzes besteht oder aus einem Teilnetz, über das mehrere Endeinrichtungen des Kommunikationsnetzes angeschlossen sind, und das zweite Segment des Kommunikationsnetzes aus einer einzelnen Endeinrichtung des Kommunikationsnetzes besteht oder aus einem Teilnetz, über das mehrere Endeinrichtungen des Kommunikationsnetzes angeschlossen sind.

Offenbart ist ferner vorzugsweise ein Automatisierungssystem, wobei das Automatisierungssystem eine vierte Baugruppe aufweist, wobei die vierte Baugruppe aufweist: eine vierte Steuereinheit, die eingerichtet ist, die vierte Baugruppe zu steuern und zu überwachen, und für einen CAN-Bus als Endgerät zu dienen, eine achte Kommunikationsschnittstelle, die mit einem ersten Segment eines CAN-Busses und der vierten Steuereinheit verbunden ist, eine neunte Kommunikationsschnittstelle, die mit dem Rückwandbus verbunden ist, eine vierte Netzweiche, die die neunte Kommunikationsschnittstelle und die vierte Steuereinheit so miteinander verbindet, dass Datenkommunikation gemäß Ethernet-Protokoll erfolgen kann, wobei zwischen der ersten Steuereinheit und der vierten Steuereinheit über den Rückwandbus das nach IEEE 802.1Q einfach markiertes VLAN (V3) etabliert ist, über das die erste Steuereinheit mit der vierten Steuereinheit kommunizieren und diese steuern kann.

Offenbart ist ferner ein Betriebsverfahren für ein Automatisierungssystem, dass die Schritte aufweist: Etablieren eines nach IEEE 802.1Q einfach markierten VLANs (V3) zwischen der ersten Steuereinheit und der zweiten Steuereinheit über den Rückwandbus, über das die Steuereinheit mit der Steuereinheit kommunizieren und diese steuern kann, Etablieren eines nach IEEE 802.1ad ersten zweifach markierten VLANs (T1) zwischen der ersten Netzweiche und der zweiten Netzweiche über den Rückwandbus, Übermitteln des Datenverkehrs des nach IEEE 802.1Q ersten einfach markierten VLANs (V1) über das erste zweifach markierte VLAN (T1) zwischen der ersten Netzweiche und der zweiten Netzweiche über den Rückwandbus.

Offenbart ist ferner vorzugsweise das Betriebsverfahren für ein Automatisierungssystem, das ferner die Schritte aufweist: Etablieren eines nach IEEE 802.1Q einfach markierten VLANs (V3) zwischen der ersten Steuereinheit und der dritten Steuereinheit über den Rückwandbus, über das die erste Steuereinheit mit der dritten Steuereinheit kommunizieren und diese steuern kann, Etablieren eines nach IEEE 802.1ad zweiten zweifach markierten VLAN (T2) zwischen der ersten Netzweiche und der dritten Netzweiche über den Rückwandbus. Übermitteln des Datenverkehrs des nach IEEE 802.1Q zweiten einfach markiertes VLAN (V2) über das zweite zweifach markiertes VLAN (T2) zwischen der ersten Netzweiche und der dritten Netzweiche über den Rückwandbus.

Offenbart ist ferner vorzugsweise das Betriebsverfahren für ein Automatisierungssystem, das ferner die Schritte aufweist: Etablieren eines nach IEEE 802.1Q einfach markierten VLANs (V3) zwischen der ersten Steuereinheit und der vierten Steuereinheit über den Rückwandbus, über das die erste Steuereinheit mit der vierten Steuereinheit kommunizieren und diese steuern kann.

Offenbart ist ferner ein Computerprogrammprodukt, das eingerichtet ist, ein Automatisierungssystem so zu steuern, dass eines der vorher beschriebenen Betriebsverfahren ausgeführt wird.

Ein Ausführungsbeispiel für das Verfahren gemäß der vorliegenden Erfindung wird anhand der nachfolgend aufgeführten Figuren erläutert. Hierbei ist das Ausführungsbeispiel als beispielhafte Implementierung des erfindungsgemäßen Verfahrens vorgesehen, die den Erfindungsgegenstand, wie er in den Ansprüchen definiert ist, nicht einschränkt.
Fig. 1 zeigt ein Schaubild eins ersten Ausführungsbeispiels der Erfindung.
Fig. 2 zeigt ein Schaubild des virtuellen Netzes V3 aus dem ersten Ausführungsbeispiel.
Fig. 3 zeigt ein Schaubild des virtuellen Netzes V1 aus dem ersten Ausführungsbeispiel.
Fig. 4 zeigt ein Schaubild des virtuellen Netzes V2 aus dem ersten Ausführungsbeispiel.
Fig. 5a und 5b zeigen zwei Varianten eines Ablaufdiagramms des erfindungsgemäßen Verfahrens.
Fig. 6 zeigt ein Schaubild eines zweiten Ausführungsbeispiels der Erfindung.

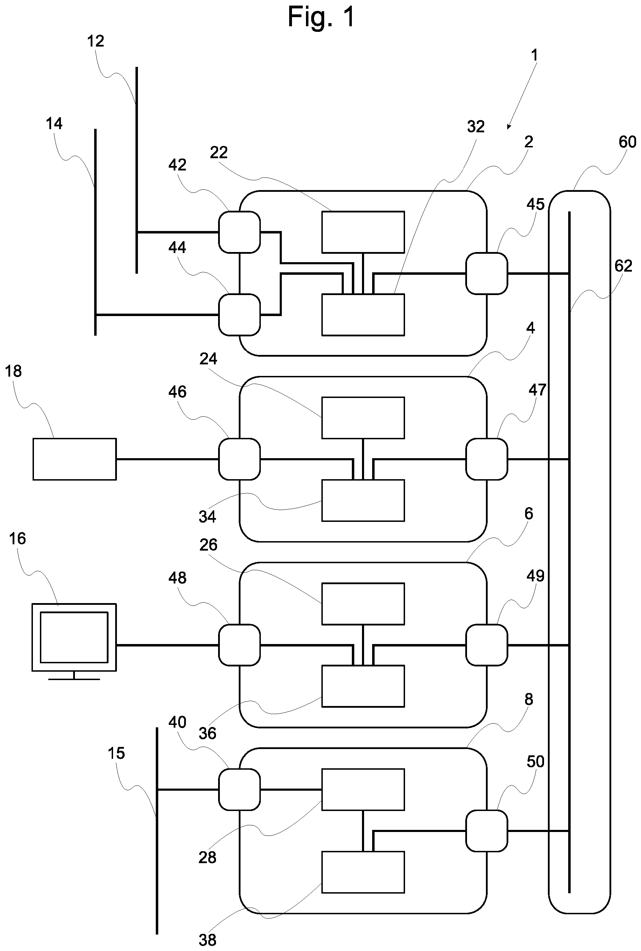

Unter Verweis auf Fig. 1 wird der Aufbau eines ersten Ausführungsbeispiels eines Automatisierungssystems für das erfindungsgemäße Verfahren beschrieben.

Ein Automatisierungssystem 1 ist ein System zum Automatisieren von technischen Prozessen in einer Umgebung von gesteuerten Vorrichtungen. Im vorliegenden Fall ist das Automatisierungssystem ein System zur automatischen Steuerung von Funktionen eines Schienenfahrzeugverbundes, beispielsweise dem Öffnen und Schließen von Zugtüren, der Steuerung von Klimaanlagen, Beleuchtung, Antriebs- und Verzögerungsvorrichtungen, der Ausgabe von Durchsagen, etc.

Das Automatisierungssystem weist ein Gehäuse auf. In dem Gehäuse sind die erste Baugruppe 2, die zweite Baugruppe 4, die dritte Baugruppe 6 und die vierte Baugruppe 8 untergebracht. Ferner ist in dem Gehäuse die Rück-Leiterplatte 60 (auch "Backplane") vorgesehen.

Die Rück-Leiterplatte 60 beinhaltet den Rückwandbus 62 (auch "Backplane Bus").

Die erste Baugruppe 2 weist eine Netzweiche 32 (auch "Switch") auf. Über die Netzweiche 2 können mehrere Netzteilnehmer miteinander verbunden werden. Die Netzweiche 2 verwendet als Kommunikationsprotokoll Ethernet nach dem Standard IEEE 802.3. Ferner ist die Netzweiche 32 dazu eingerichtet, Datenkommunikation als virtuelle lokale Netze ("VLAN") gemäß IEEE 802.1Q einfach markiert zu übermitteln ("tagged VLAN"). Ferner ist die Netzweiche 32 dazu eingerichtet, Datenkommunikation als geschachteltes VLAN gemäß IEEE 802.1ad doppelt markiert zu übermitteln ("double tagged VLAN").

Die erste Baugruppe 2 weist eine erste Kommunikationsschnittstelle 42, eine zweite Kommunikationsschnittstelle 44 und eine dritte Kommunikationsschnittstelle 45 auf, die mit der Netzweiche 32 verbunden sind und eingerichtet sind, Datenkommunikation gemäß Ethernetprotokoll zu übertragen. Die erste Kommunikationsschnittstelle 42 ist mit einem Multimedianetz 12 verbunden. Die zweite Kommunikationsschnittstelle 44 ist mit einem Zugsteuerungs- und Verwaltungssystemnetz 14 (TCMS-Netz, "Train Control and Managing System Network") verbunden. Die dritte Kommunikationsschnittstelle ist mit dem Rückwandbus 62 der Rück-Leiterplatte 60 verbunden.

Die erste Baugruppe 2 weist eine Steuereinheit 22 auf. Die Steuereinheit 22 ist mit der Netzweiche 32 verbunden und eingerichtet mittels Ethernet-Protokoll mit dieser zu kommunizieren. Die Steuereinheit 22 steuert und überwacht die erste Baugruppe 2. Ferner übernimmt sie die Steuerung der Automatisierungssystem-internen Kommunikationsnetze und fungiert hier als übergeordnete Steuereinheit ("Master") des Automatisierungssystems 1. Ferner ist die Steuereinheit eine Endeinrichtung im Zugsteuerungs- und Verwaltungssystem. Die Steuereinheit 22 ist dazu eingerichtet, Datenkommunikation als VLAN gemäß IEEE 802.1ad doppelt markiert zu übermitteln.

Die zweite Baugruppe 4 ist im Wesentlichen wie die erste Baugruppe 2 aufgebaut. Abweichungen von Baugruppe 2 werden nachfolgend beschrieben. Im Übrigen wird auf die Beschreibung der ersten Baugruppe 2 verwiesen. Die zweite Baugruppe 4 weist lediglich zwei Kommunikationsschnittstellen 46, 47 auf, die mit einer Netzweiche 34 verbunden sind. Über die Kommunikationsschnittstelle 46 ist die zweite Baugruppe mit einer TCMS-Endeinrichtung 18 des Zugsteuerungs- und Verwaltungssystemnetzes 14 verbunden, beispielsweise einer Zugtür. Über die Kommunikationsschnittstelle 47 ist die zweite Baugruppe 4 mit dem Rückwandbus 62 verbunden. Eine Steuereinheit 24 steuert und überwacht die zweite Baugruppe 4.

Die dritte Baugruppe 6 ist im Wesentlichen wie die zweite Baugruppe 4 aufgebaut. Abweichungen von Baugruppe 4 werden nachfolgend beschrieben. Im Übrigen wird auf die Beschreibung der zweiten Baugruppe 4 verwiesen. Die dritte Baugruppe 6 weist eine Kommunikationsschnittstelle 48 auf, über die die dritte Baugruppe 6 mit einer Endeinrichtung 16 des Multimedia-Netzes 12 verbunden, beispielsweise einem Bildschirm zur Darstellung von Bildern und Bildsequenzen/Filmen.

Die vierte Baugruppe 8 ist im Wesentlichen wie die zweite Baugruppe 4 aufgebaut. Abweichungen von Baugruppe 4 werden nachfolgend beschrieben. Im Übrigen wird auf die Beschreibung der zweiten Baugruppe 4 verwiesen. Die vierte Baugruppe 8 weist eine Kommunikationsschnittstelle 40 auf, die eingerichtet ist, an einen CAN-Bus angeschlossen zu werden und Datenkommunikation gemäß ISO 11898 zu übertragen. Eine Steuereinheit 28 ist mit der Kommunikationsschnittstelle 40 verbunden und arbeitet als Endeinrichtung des CAN-Busses. Die Steuereinheit 28 ist ferner mit einer Netzweiche 38 und über diese und eine Kommunikationsschnittstelle 50 mit dem Rückwandbus 62 verbunden. Die Steuereinheit 28 steuert und überwacht die vierte Baugruppe 8. Über den CAN-Bus 15 kann über die Steuereinheit 28 mit weiteren, nicht dargestellten Steuergeräten oder Endeinrichtungen kommuniziert werden.

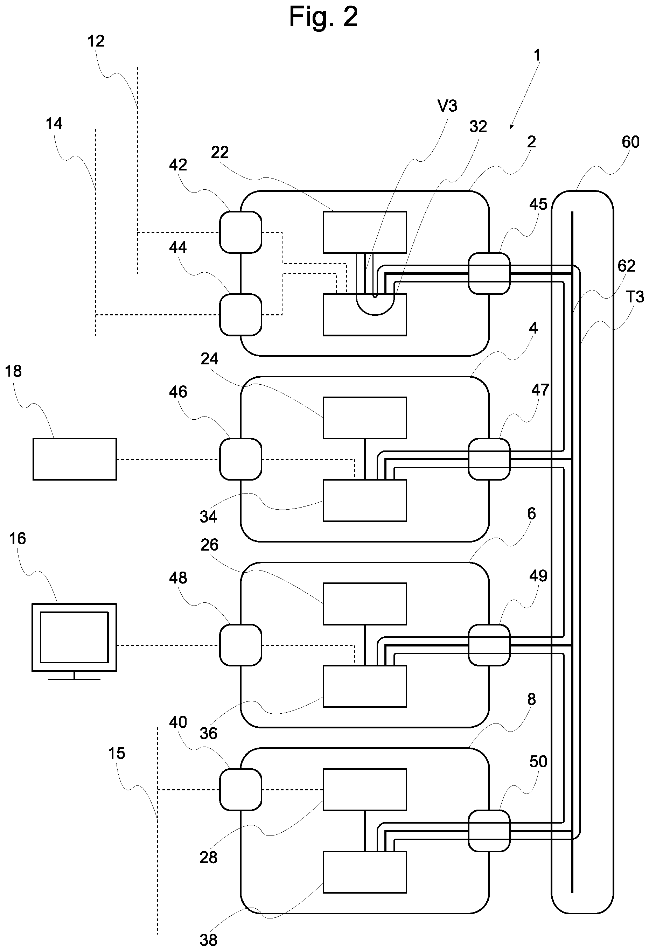

Anhand von Figur 2 wird ein Automatisierungssystem-internes virtuelles Kommunikationsnetz V3 beschrieben.

Das Kommunikationsnetz V3, in Fig. 2 durch durchgezogene Linien dargestellt, dient zur Kommunikation zwischen der Steuereinheit 22 in ihrer Funktion als übergeordnete Steuereinheit mit den Steuereinheiten 24, 26 und 28. Hierfür wird zwischen den Netzweichen 32, 34, 36 und 38 ein doppelt markiertes VLAN T3 gemäß IEEE 802.1ad etabliert. über das das Kommunikationsnetz V3 getunnelt wird. Hierfür werden die Datenpakete des Ethernet-Protokolls zwischen den Netzweichen mit einer zusätzlichen Markierung und einer Identifizierungsnummer für ein VLAN versehen, die es den an der Datenkommunikation beteiligten Netzweichen 32, 34, 36 und 38 erlaubt, das Datenpaket einem VLAN zuzuordnen und zu gewährleisten, dass nur berechtigte Endeinrichtungen, hier die Steuereinheiten 22, 24, 26 und 28 an der Datenkommunikation über das VLAN V3 teilhaben. An weitere Endeinrichtungen wie beispielsweise das Multimedia-Endeinrichtung 16 oder der TCMS-Endeinrichtung 18, wird Datenkommunikation aus dem VLAN V3 oder dem Tunnel T3 von den Netzweichen nicht übermittelt.

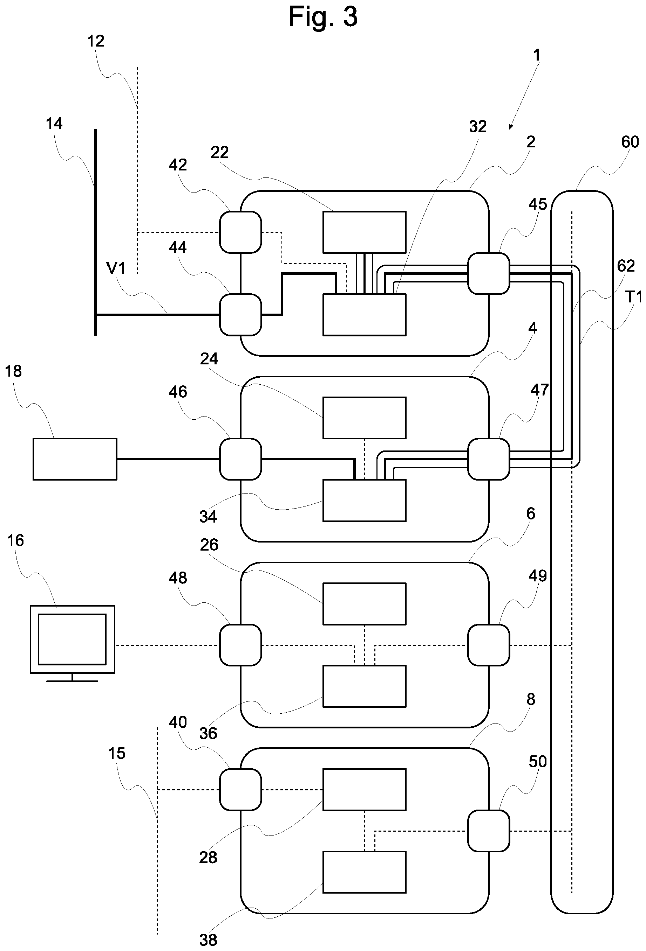

Anhand von Figur 3 wird ein Automatisierungssystem-internes virtuelles Kommunikationsnetz V1 beschrieben.

Das virtuelle Kommunikationsnetz V1, in Fig. 3 durch durchgezogene Linien dargestellt, dient zur Kommunikation zwischen Endeinrichtungen des Zugsteuerungs- und Verwaltungssystemnetzes 14. Da das Zugsteuerungs- und Verwaltungssystemnetz 14 bereits als VLAN ausgestaltet ist und somit die Datenpakete des Ethernet-Protokolls mit einer Markierung und einer VLAN-Identifizierungsnummer gemäß IEEE 802.1Q versehen sind, ist es nicht möglich, zum Aufbau eines VLAN zwischen der Steuereinheit 22, der Netzweiche 32 und der Netzweiche 34 ein VLAN gemäß IEEE 802.1Q zu etablieren. Um den Datenverkehr des VLAN V1 über mehrere Baugruppen auszudehnen, ist es erforderlich, dass zwischen der Steuereinheit22, der Netzweiche 32 und der Netzweiche 34 ein doppelt markiertes VLAN gemäß IEEE 802.1ad etabliert wird. Bei der Übermittlung des Datenpakets zwischen der Steuereinheit 22, der Netzweiche 32 und der Netzweiche 34 wird der VLAN-Markierung des Zugsteuerungs- und Verwaltungssystemnetzes 14 V1 eine zweite Markierung und eine zweite VLAN-Identifizierungsnummer vorangestellt, eine Zuordnung des Datenpakets zu einem weiteren, geschachtelten VLAN ermöglicht und somit ein Kommunikationstunnel T1 zwischen der Steuereinheit 22, der Netzweiche 32 und der Netzweiche 34 etabliert. Dies erlaubt den an der Datenkommunikation beteiligten Steuereinheit 22, Netzweichen 32 und 34 das Datenpaket einem VLAN zuzuordnen und zu gewährleisten, dass nur berechtigte Endeinrichtungen, hier die Kommunikationsschnittstellen 44 und 46 sowie die Steuereinheit 22 an der Datenkommunikation über das VLAN V1 teilhaben. An weitere Endeinrichtungen wie beispielsweise die Multimedia-Endeinrichtung 16 oder das Multimedia-Netz 12, wird Datenkommunikation aus dem VLAN V1 von den Netzweichen nicht übermittelt. Die Steuereinheit 22 stellt ebenfalls eine Endeinrichtung des TCMS-Netzes 14 dar und übernimmt die Funktion einer übergeordneten Steuereinheit.

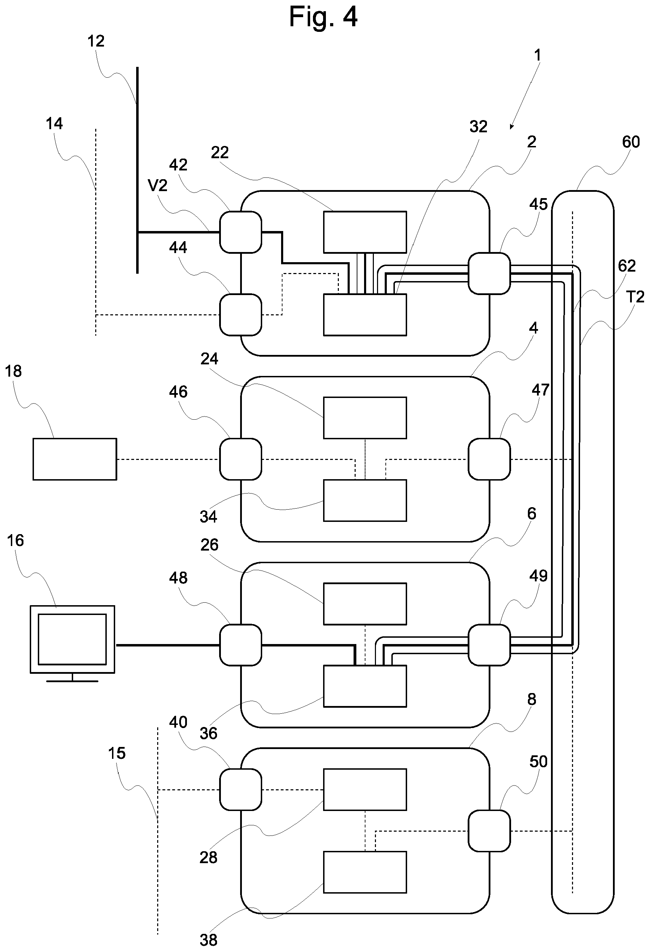

Anhand von Figur 4 wird ein Automatisierungssystem-internes virtuelles Kommunikationsnetz V2 beschrieben.

Das virtuelle Kommunikationsnetz V2, in Fig. 4 durch durchgezogene Linien dargestellt, dient zur Kommunikation zwischen Endeinrichtungen des Multimedia-Netzes 12. Da das Multimedia-Netz 12 wie das TCMS-Netz 14 bereits als VLAN ausgestaltet ist und somit die Datenpakete des Ethernet-Protokolls mit einer Markierung und einer VLAN-Identifizierungsnummer gemäß IEEE 802.1Q versehen sind, ist es nicht möglich, zum Aufbau eines VLAN zwischen der Netzweiche 32 und der Netzweiche 36 ein VLAN gemäß IEEE 802.1Q zu etablieren. Um den Datenverkehr des VLAN V2 über mehrere Baugruppen auszudehnen, ist es erforderlich, dass zwischen der Steuereinheit 22, der Netzweiche 32 und der Netzweiche 36 ein doppelt markiertes VLAN gemäß IEEE 802.1ad etabliert wird. Bei der Übermittlung des Datenpakets zwischen der Steuereinheit 22, der Netzweiche 32 und der Netzweiche 36 wird der VLAN-Markierung des Multimedia-Netzes V1 eine zweite Markierung und eine zweite VLAN-Identifizierungsnummer vorangestellt, eine Zuordnung des Datenpakets zu einem weiteren, geschachtelten VLAN ermöglicht und somit ein Kommunikationstunnel T2 zwischen der Steuereinheit 22, der Netzweiche 32 und der Netzweiche 36 etabliert. Dies erlaubt den an der Datenkommunikation beteiligten Steuereinheit 22, den Netzweichen 32 und 36 das Datenpaket einem VLAN zuzuordnen und zu gewährleisten, dass nur berechtigte Endeinrichtungen, hier die Kommunikationsschnittstellen 42 und 48 sowie die Steuereinheit 22 an der Datenkommunikation über das VLAN V2 teilhaben. An weitere Endeinrichtungen wie beispielsweise die TCMS-Endeinrichtung 18 oder das TCMS-Netz 14, wird Datenkommunikation aus dem VLAN V1 von den Netzweichen nicht übermittelt. Die Steuereinheit 22 übernimmt auch bei der Übermittlung der Multimedia-Datenkommunikation die Funktion einer übergeordneten Steuereinheit.

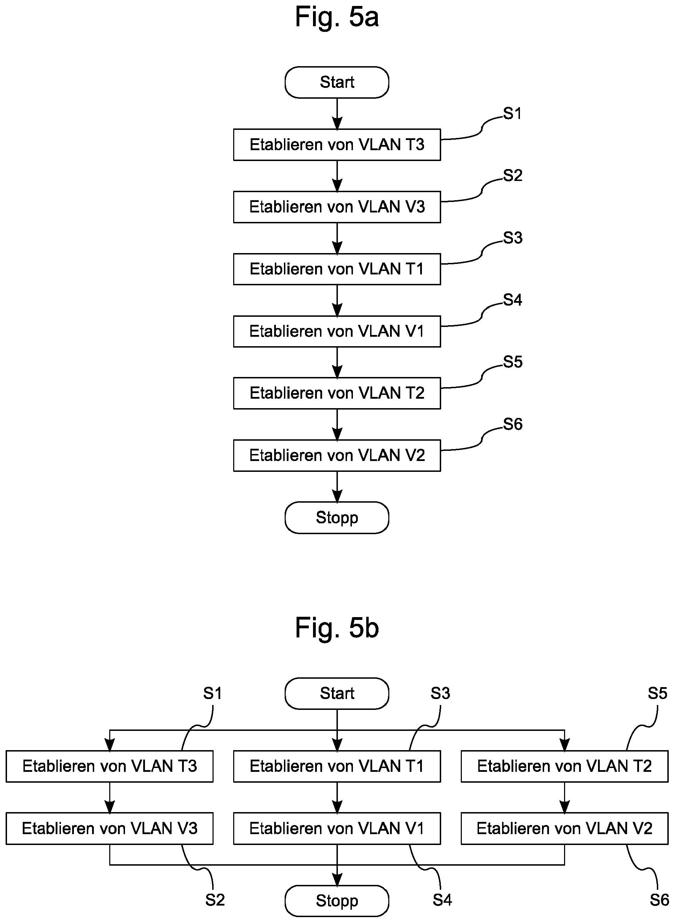

Anhand von Figur 5a wird ein Betriebsverfahren des Automatisierungssystems aus dem Ausführungsbeispiel erläutert.

In dem Automatisierungssystem 1 aus dem Ausführungsbeispiel wird in einem ersten Schritt S1 ein nach IEEE 802.1ad zweifach markiertes VLAN T3 zwischen der ersten Steuereinheit 22, der ersten Netzweiche 32, der zweiten Netzweiche 34, der dritten Netzweiche 36 und der vierten Netzweiche 38 über den Rückwandbus 62 etabliert.

In einem zweiten Schritt S2 wird ein nach IEEE 802.1Q einfach markiertes VLAN, eine nicht verschlüsselte und einem VLAN zugeordnete Kommunikationsverbindung oder ein anderweitig definiertes VLAN als Kommunikationsverbindung V3 zwischen der ersten Steuereinheit 22, der zweiten Steuereinheit 24, der dritten Steuereinheit 26 und der vierten Steuereinheit 28 über das VLAN T3 über den Rückwandbus 62 etabliert, über das die erste Steuereinheit 22 mit übrigen Steuereinheiten kommunizieren und diese steuern kann.

In einem dritten Schritt S3 wird ein nach IEEE 802.1ad erstes zweifach markiertes VLAN T1 zwischen der ersten Steuereinheit 22, der ersten Netzweiche 32 und der zweiten Netzweiche 34 über den Rückwandbus 62 etabliert.

In einem vierten Schritt S4 wird Datenverkehr des nach IEEE 802.1Q ersten einfach markierten VLAN V1 über das erste zweifach markiertes VLAN T1 zwischen der ersten Netzweiche (32) und der zweiten Netzweiche 34 über den Rückwandbus 62 übermittelt.

In einem fünften Schritt S5 wird ein nach IEEE 802.1ad zweites zweifach markiertes VLAN T2 zwischen der ersten Steuereinheit 22, der ersten Netzweiche 32 und der dritten Netzweiche 36 über den Rückwandbus 62 etabliert.

In einem sechsten Schritt S6 wird Datenverkehr des nach IEEE 802.1Q zweiten einfach markierten VLAN V2 über das zweite zweifach markierte VLAN T2 zwischen der ersten Netzweiche (32) und der dritten Netzweiche 34 über den Rückwandbus 62 übermittelt.

Im Ausführungsbeispiel erfolgen die Schritte S1, S2, S3, S4 und S5 in der angegebenen Abfolge. Abweichungen hiervon sind möglich. Eine sequentielle Abhängigkeit besteht jeweils nur zwischen den Schritten S1 mit S2, sowie S3 mit S4, sowie S5 mit S6, sodass die Schritte im Übrigen in anderer Reihenfolge oder gar gleichlaufend ausgeführt werden können. Ein solcher Ablauf ist in Fig. 5b dargestellt.

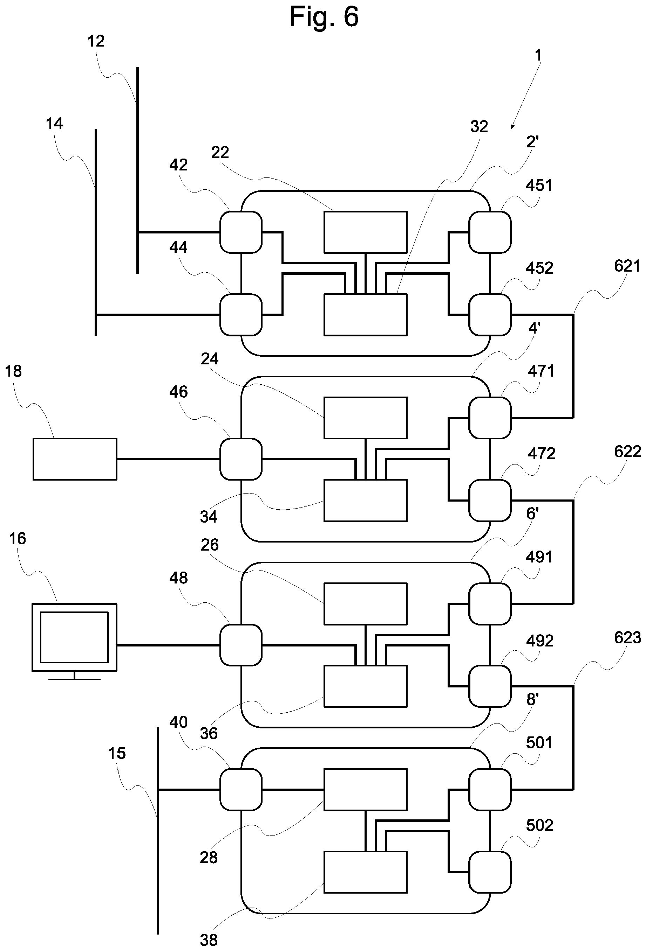

Unter Verweis auf Fig. 6 wird der Aufbau eines zweiten Ausführungsbeispiels eines Automatisierungssystems für das Verfahren beschrieben. Das zweite Ausführungsbeispiel gleicht im Wesentlichen dem ersten Ausführungsbeispiel. Im Folgenden werden die Abweichungen des zweiten Ausführungsbeispiels vom ersten Ausführungsbeispiel beschrieben. Abgesehen von diesen Abweichungen sind alle Merkmale und Eigenschaften des ersten Ausführungsbeispiels auf das zweite Ausführungsbeispiel übertragbar.

Das Automatisierungssystem 1' aus dem zweiten Ausführungsbeispiel weist im Gegensatz zum ersten Ausführungsbeispiel kein Gehäuse und keine Rück-Leiterplatte auf. Es weist eine erste Baugruppe 2', eine zweite Baugruppe 4', eine dritte Baugruppe 6' und eine vierte Baugruppe 8' auf. Die Baugruppen sind in eigenen Modulen untergebracht und teilen kein gemeinsames Gehäuse.

Die erste Baugruppe 2' weist anstelle der dritten Kommunikationsschnittstelle 45 aus der ersten Baugruppe 2 des ersten Ausführungsbeispiels eine vierte Kommunikationsschnittstelle 451 und eine fünfte Kommunikationsschnittstelle 452 auf die mit der Netzweiche 32 derart verbunden sind, dass Ethernet-Kommunikationsverbindungen darüber aufgebaut werden können. Im Übrigen weist die erste Baugruppe 2' alle Merkmale und Funktionen der ersten Baugruppe 2 des ersten Ausführungsbeispiels auf.

Die zweite Baugruppe 4' weist anstelle der Kommunikationsschnittstelle 47 aus der zweiten Baugruppe 4 des ersten Ausführungsbeispiels eine Kommunikationsschnittstelle 471 und eine Kommunikationsschnittstelle 472 auf die mit der Netzweiche 34 derart verbunden sind, dass Ethernet-Kommunikationsverbindungen darüber aufgebaut werden können. Im Übrigen weist die zweite Baugruppe 4' alle Merkmale und Funktionen der zweiten Baugruppe 4 des ersten Ausführungsbeispiels auf.

Über ein erstes Rückwandkabel 621 ist die Kommunikationsschnittstelle 452 der ersten Baugruppe 2' mit der Kommunikationsschnittstelle 471 der zweiten Baugruppe 4' verbunden. Die dritte Baugruppe 6' weist anstelle der Kommunikationsschnittstelle 49 aus der dritten Baugruppe 6 des ersten Ausführungsbeispiels eine Kommunikationsschnittstelle 491 und eine Kommunikationsschnittstelle 492 auf die mit der Netzweiche 36 derart verbunden sind, dass Ethernet-Kommunikationsverbindungen darüber aufgebaut werden können. Im Übrigen weist die dritte Baugruppe 6' alle Merkmale und Funktionen der dritten Baugruppe 6 des ersten Ausführungsbeispiels auf.

Über ein zweites Rückwandkabel 622 ist die Kommunikationsschnittstelle 472 der zweiten Baugruppe 4' mit der Kommunikationsschnittstelle 491 der dritten Baugruppe 4' verbunden.

Die vierte Baugruppe 8' weist anstelle der Kommunikationsschnittstelle 50 aus der vierten Baugruppe 8 des ersten Ausführungsbeispiels eine Kommunikationsschnittstelle 501 und eine Kommunikationsschnittstelle 502 auf die mit der Netzweiche 38 derart verbunden sind, dass Ethernet-Kommunikationsverbindungen darüber aufgebaut werden können. Im Übrigen weist die vierte Baugruppe 8' alle Merkmale und Funktionen der vierten Baugruppe 4 des ersten Ausführungsbeispiels auf.

Über ein drittes Rückwandkabel 623 ist die Kommunikationsschnittstelle 472 der dritten Baugruppe 6' mit der Kommunikationsschnittstelle 501 der vierten Baugruppe 8' verbunden.

Ein Betriebsverfahren des Automatisierungssystems 1' aus dem zweiten Ausführungsbeispiel erfolgt in gleicher Weise wie im ersten Ausführungsbeispiel mit dem Unterschied, dass die Datenkommunikation, die im ersten Ausführungsbeispiel über den Rückwandbus 62 erfolgt, im zweiten Ausführungsbeispiel über das erste Rückwandkabel 621, das zweite Rückwandkabel 622 oder das dritte Rückwandkabel 623 erfolgt. So wird beispielsweise das VLAN T1 von der ersten Netzweiche 32 über das Rückwandkabel 621 zur zweiten Netzweiche 34 aufgebaut. Ferner wird beispielsweise das VLAN T2 von der ersten Netzweiche 32 über das Rückwandkabel 621 zur zweiten Netzweiche 34 und von der zweiten Netzweiche 34 über das Rückwandkabel 622 zur dritten Netzweiche 36 aufgebaut. Ferner wird beispielsweise das VLAN T3 von der ersten Netzweiche 32 über das Rückwandkabel 621 zur zweiten Netzweiche 34, von der zweiten Netzweiche 34 über das Rückwandkabel 622 zur dritten Netzweiche 36 und von der dritten Netzweiche 36 über das Rückwandkabel 623 zur vierten Netzweiche 38 aufgebaut.

Im zweiten Ausführungsbeispiel sind die Baugruppen 2', 4', 6', 8' in einer bestimmten Reihenfolge angeordnet und miteinander verbunden. Diese Reihenfolge ist Beispielhaft und jede andere Reihenfolge ist möglich.

Da die Baugruppen 2, 2', 4, 4', 6, 6', 8, 8', die externen Systeme 12, 14, 16, 18, und die Ethernet-Kommunikationsschnittstelle 42, 44, 46, 48 mittels Ethernet-VLANs in Netzwerke V1, V2, V3 unterteilt sind, können direkte Kommunikationen zwischen den Baugruppen 2, 2', 4, 4', 6, 6', 8, 8und den externen Systeme 12, 14, 16, 18 gezielt nach dem Bedarf abgebildet werden, damit nicht alle Kommunikationen über einen Master stattfinden müssen, und somit ist der Master entlastet.

In den obigen Ausführungsbeispielen handelt es sich bei den Netzen V1 und V2 um einfach markierte VLANs nach IEEE 802.1Q. Die obige Lehre erlaubt zwar die Weiterleitung einfach markierter VLANS über den Rückwandbus mittels zweifach markierter VLANS nach IEEE 802.1ad, setzt aber keine VLANs nach IEEE 802.1Q voraus, sodass es sich bei den Netzen V1 oder V2 auch um herkömmlichen, unverschlüsselten und unmarkierten Ethernet-Datenverkehr handeln kann, der zuvor kein VLAN zugeordnet war, oder einem VLAN, das nicht über Markierungen sondern über Anschlussstellen definiert ist. Das gleiche gilt für das Netz V3.

In den obigen Ausführungsbeispielen ist das Automatisierungssystem mit vier Baugruppen beschrieben. Das Automatisierungssystem kann - je nach Funktionsbedarf - jedoch nur aus zwei oder mehr Baugruppen, insbesondere mehr als vier Baugruppen bestehen.

In den obigen Ausführungsbeispielen sind die Baugruppen mit einer bestimmten Anzahl an Schnittstellen beschrieben. Je nach Bedarf können die Baugruppen jedoch auch weitere Schnittstellen aufweisen.

In den obigen Ausführungsbeispielen ist das Automatisierungssystem ein System zur automatischen Steuerung von Funktionen eines Schienenfahrzeugverbundes. Die Erfindung ist jedoch nicht auf Automatisierungssysteme wie Systeme zur automatischen Steuerung von Funktionen eines Schienenfahrzeugverbundes beschränkt. Das Automatisierungssystem kann auch ein solches zur Steuerung von Fertigungsanlagen in einem Fertigungsbetrieb oder anderes sein.

Im zweiten Ausführungsbeispiel ist das Automatisierungssystem mit den Rückwandkabeln 621, 622, 623 versehen, die die Baugruppen 2', 4', 6' und 8' miteinander verbinden. Alternativ können die Kommunikationsschnittstellen 451, 452, 471, 472, 491, 492, 501 und 502 so an den Baugruppen angeordnet und ausgestaltet sein dass die Baugruppen über diese Schnittstellen durch Stapeln direkt mit benachbarten Baugruppen verbunden werden und ein außerhalb der Baugruppen ausgebildeter Rückwandbus entfällt

In den obigen Ausführungsbeispielen sind die Baugruppen mit bestimmten Funktionalitäten ausgestattet. So ist die erste Baugruppe 2, 2' an das Multimedia-Netz 12, und an das TCMS-Netz 14 angeschlossen, wohingegen die zweite Baugruppe 4, 4' an eine Endeinrichtung des TCMS-Netzes 18 und die dritte Baugruppe 6, 6' an eine Endeinrichtung des Multimedia-Netzes 12 angeschlossen ist. Ferner ist die vierte Baugruppe 8, 8' an einen CAN-Bus angeschlossen. Erkennbar für den Fachmann lässt sich die Funktionalität auch anders auf die Baugruppen verteilen. So können an der ersten Baugruppe 2, 2' der zweiten Baugruppe 4, 4' oder der dritten Baugruppe 6, 6' beispielsweise über eine oder mehrere weitere Kommunikationsschnittstelle eine oder mehrere Endeinrichtung aus dem Multimedianetz 12 oder dem Zugsteuerungs- und Verwaltungsnetz 14 oder unter Vorsehung einer Steuervorrichtung wie jener aus der vierten Baugruppe 8, 8' ein CAN-Bus angeschlossen sein.

In den obigen Ausführungsbeispielen ist lediglich die erste Steuereinheit 22 der ersten Baugruppe 2, 2' eingerichtet, Datenkommunikation als VLAN gemäß IEEE 802.1ad doppelt markiert zu übermitteln. Dies ist in den Ausführungsbeispielen erforderlich, da die erste Steuereinheit 22 Datenkommunikation über mehrere, d.h. über die doppelt markierten VLAN T1, T2 und T3 übermittelt und die Steuereinheit 22 die entsprechenden VLAN über deren Markierung zu unterscheiden. Die übrigen Steuereinheiten 24, 26, 28 übertragen Datenkommunikation in den Ausführungsbeispielen lediglich über das VLAN T3, weshalb eine Differenzierung zwischen unterschiedlichen doppelt markierten VLAN durch diese Steuereinheiten nicht erforderlich ist. Je nach Funktionsumfang, insbesondere wenn mehrere Funktionen von einer Baugruppe erfüllt werden, können die übrigen Steuereinheiten 24, 26, 28 eingerichtet sein, Datenkommunikation als VLAN gemäß IEEE 802.1ad doppelt markiert zu übermitteln. Dies ist insbesondere dann der Fall, wenn eine Steuereinheit Datenkommunikation über mehr als ein doppelt markiertes VLAN überträgt.

So kann an der ersten Baugruppe 2 beispielsweise über eine oder mehrere weitere Kommunikationsschnittstelle eine oder mehrere Endeinrichtung aus dem Multimedianetz 12 oder dem Zugsteuerungs- und Verwaltungsnetz 14 angeschlossen sein.

Da das Automatisierungssystem aus dem Ausführungsbeispiel modular aufgebaut ist, können einzelne Baugruppen, insbesondere die zweite Baugruppe 4, die dritte Baugruppe 6 oder die vierte Baugruppe 8 unter Wegfall deren Funktionalität und Merkmale aus dem Automatisierungssystem entfernt, und das Automatisierungssystem 1 so betrieben werden.

Weitere Abwandlungen der Erfindung innerhalb des Umfangs der Patentansprüche sind möglich.

Die Junktoren ... "und", "oder" und "entweder ... oder" werden in der Bedeutung verwendet, die an die logische Konjunktion, die logische Adjunktion (oft "und/oder"), bzw. die logische Kontravalenz angelehnt sind.

### BEZUGSZEICHENLISTE

1 Automatisierungssystem
2, 2' erste Baugruppe
4, 4' zweite Baugruppe
6, 6' dritte Baugruppe
8, 8' vierte Baugruppe
12 Multimedianetz
14 TCMS-Netz
15 CAN-Bus-Netz
16 Multimediaendgerät (externes System)
18 TCMS-Endgerät (externes System)
22, 24, 26, 28 Steuereinheit
32, 34, 36, 38 Netzweiche
V1, V2, V3 Virtuelles Netz
T1, T2 Kommunikationstunnel
40 Kommunikationsschnittstelle (CAN-Bus)
42, 44, 45, 46, 47, 48, 48, 50, 451, 452, 471, 472, 491, 492, 501, 502 Kommunikationsschnittstelle (Ethernet)
60 Rück-Leiterplatte
62 Rückwandbus (Ethernet)
621, 622, 623 Rückwandkabel

## Patentansprüche

1. Ein Automatisierungssystem (1), das aufweist:
einen Rückwandbus (62),
eine erste Baugruppe (2), und
eine zweite Baugruppe (4),
**dadurch gekennzeichnet, dass**
die erste Baugruppe (2) aufweist:
eine erste Steuereinheit (22), die eingerichtet ist, die erste Baugruppe (2) zu steuern und zu überwachen und für das Automatisierungssystem (1) die Funktion einer übergeordneten Steuereinheit zu übernehmen,
eine erste Kommunikationsschnittstelle 44), die mit einem ersten Segment eines Zugsteuerungs- und Verwaltungssystem-Netzes (14) verbindbar ist,
eine zweite Kommunikationsschnittstelle (45), die mit dem Rückwandbus (62) verbunden ist,
eine erste Netzweiche (32), die die erste Kommunikationsschnittstelle (42), die zweite Kommunikationsschnittstelle (45) und die erste Steuereinheit (22) so miteinander verbindet, dass Datenkommunikation gemäß Ethernet-Protokoll erfolgen kann,
die zweite Baugruppe (4) aufweist:
eine zweite Steuereinheit (24), die eingerichtet ist, die zweite Baugruppe (4) zu steuern und zu überwachen,
eine dritte Kommunikationsschnittstelle (46), die mit einem zweiten Segment des Zugsteuerungs- und Verwaltungssystem-Netzes (14) des Zugsteuerungs- und Verwaltungssystem-Netzes (14) verbindbar ist,
eine vierte Kommunikationsschnittstelle (47), die mit dem Rückwandbus (62) verbunden ist,
eine zweite Netzweiche (34), die eingerichtet ist, die dritte Kommunikationsschnittstelle (46), die vierte Kommunikationsschnittstelle (47) und die zweite Steuereinheit (24) so miteinander zu verbinden, dass Datenkommunikation gemäß Ethernet-Protokoll erfolgt,
wobei die erste Netzweiche (32) und die zweite Netzweiche (34) eingerichtet sind, ein einfach markiertes VLAN nach IEEE 802.1Q zu etablieren und zu verarbeiten und ein zweifach markiertes VLAN (T1) nach IEEE 802.1ad zu bilden und zu verarbeiten,
das Zugsteuerungs- und Verwaltungs-Netz (14) ein nach IEEE 802.1Q erstes einfach markiertes VLAN (V1) bildet, an das die erste Steuereinheit (22) als Endeinrichtung des Zugsteuerungs- und Verwaltungs-Netzes (14) angeschlossen werden kann,
zwischen der ersten Steuereinheit (22) und der zweiten Steuereinheit (24) über den Rückwandbus 62 ein nach IEEE 802.1Q einfach markiertes VLAN (V3) etabliert ist, über das die erste Steuereinheit (22) mit der zweiten Steuereinheit (24) kommunizieren und diese steuern kann, und
zwischen der ersten Steuereinheit (22), der ersten Netzweiche (32) und der zweiten Netzweiche (34) über den Rückwandbus (62) ein nach IEEE 802.1ad erstes zweifach markiertes VLAN (T1) etabliert ist.

2. Das Automatisierungssystem (1) nach Anspruch 1, wobei
das erste Segment des Zugsteuerungs- und Verwaltungssystem-Netzes (14) aus einer einzelnen Endeinrichtung (18) des Zugsteuerungs- und Verwaltungssystem-Netzes (14) besteht oder aus einem Teilnetz, über das mehrere Endeinrichtungen (18) des Zugsteuerungs- und Verwaltungssystem-Netzes (14) angeschlossen sind, und
das zweite Segment des Zugsteuerungs- und Verwaltungssystem-Netzes (14) aus einer einzelnen Endeinrichtung (18) des Zugsteuerungs- und Verwaltungssystem-Netzes (14) besteht oder aus einem Teilnetz, über das mehrere Endeinrichtungen (18) des Zugsteuerungs- und Verwaltungssystem-Netzes (14) angeschlossen sind.

3. Das Automatisierungssystem (1) nach einem der Ansprüche 1 bis 2, wobei
die erste Baugruppe ferner aufweist:
eine fünfte Kommunikationsschnittstelle (42), die mit einem ersten Segment eines Kommunikationsnetzes (12) verbindbar ist, das ein nach IEEE 802.1Q zweites einfach markiertes VLAN (V2) bildet, an das die erste Steuereinheit (22) als Endeinrichtung angeschlossen werden kann, und das Automatisierungssystem (1) eine dritte Baugruppe (6) aufweist,
wobei die dritte Baugruppe (6) aufweist:
eine dritte Steuereinheit (26), die eingerichtet ist, die dritte Baugruppe (6) zu steuern und zu überwachen,
eine sechste Kommunikationsschnittstelle (48), die mit einem zweiten Segment des Kommunikationsnetzes (12) verbindbar ist,
eine siebte Kommunikationsschnittstelle (49), die mit dem Rückwandbus (62) verbunden ist,
eine dritte Netzweiche (36), die die sechste Kommunikationsschnittstelle (48), die siebte Kommunikationsschnittstelle (49) und die dritte Steuereinheit (26) so miteinander verbindet, dass Datenkommunikation gemäß Ethernet-Protokoll erfolgen kann,
wobei zwischen der ersten Steuereinheit (22) und der dritten Steuereinheit (26) über den Rückwandbus 62 das nach IEEE 802.1Q einfach markierte VLAN (V3) etabliert ist, über das die erste Steuereinheit (22) mit der dritten Steuereinheit (26) kommunizieren und diese steuern kann, und
zwischen der ersten Netzweiche (32) und der dritten Netzweiche (36) über den Rückwandbus (62) ein nach IEEE 802.1ad zweites zweifach markiertes VLAN (T2) etabliert ist.

4. Das Automatisierungssystem (1) nach Anspruch 3, wobei
das erste Segment des Kommunikationsnetzes (12) aus einer einzelnen Endeinrichtung (16) des Kommunikationsnetzes (12) besteht oder aus einem Teilnetz, über das mehrere Endeinrichtungen (16) des Kommunikationsnetzes (12) angeschlossen sind, und
das zweite Segment des Kommunikationsnetzes (12) aus einer einzelnen Endeinrichtung (16) des Kommunikationsnetzes (12) besteht oder aus einem Teilnetz, über das mehrere Endeinrichtungen (16) des Kommunikationsnetzes (12) angeschlossen sind.

5. Das Automatisierungssystem (1) nach einem der Ansprüche 1 bis 4, wobei das Automatisierungssystem (1) eine vierte Baugruppe (8) aufweist,
wobei die vierte Baugruppe (8) aufweist:
eine vierte Steuereinheit (28), die eingerichtet ist, die vierte Baugruppe (8) zu steuern und zu überwachen, und für einen CAN-Bus als Endgerät dient,
eine achte Kommunikationsschnittstelle (40), die mit einem ersten Segment eines CAN-Busses und der vierten Steuereinheit (28) verbindbar ist,
eine neunte Kommunikationsschnittstelle (50), die mit dem Rückwandbus (62) verbunden ist,
eine vierte Netzweiche (36), die die neunte Kommunikationsschnittstelle (50) und die vierte Steuereinheit (28) so miteinander verbindet, dass Datenkommunikation gemäß Ethernet-Protokoll erfolgen kann,
wobei zwischen der ersten Steuereinheit (22) und der vierten Steuereinheit (28) über den Rückwandbus (62) das nach IEEE 802.1Q einfach markierte VLAN (V3) etabliert ist, über das die erste Steuereinheit (22) mit der vierten Steuereinheit (28) kommunizieren und diese steuern kann.

6. Das Automatisierungssystem (1) nach einem der Ansprüche 1 bis 5, wobei die erste Steuereinheit (22) oder die zweite Steuereinheit (24) eingerichtet sind, ein nach IEEE 802.1ad zweites zweifach markiertes VLAN zu etablieren.

7. Betriebsverfahren für ein Automatisierungssystem nach einem der Ansprüche 1 bis 2, dass die Schritte aufweist:
Etablieren eines nach IEEE 802.1Q einfach markierten VLAN (V3) zwischen der ersten Steuereinheit (22) und der zweiten Steuereinheit (24) über den Rückwandbus (62), über das die Steuereinheit (22) mit der Steuereinheit (24) kommunizieren und diese steuern kann,
Etablieren eines nach IEEE 802.1ad ersten zweifach markierten VLAN (T1) zwischen der ersten Netzweiche (32) und der zweiten Netzweiche (34) über den Rückwandbus (62),
Übermitteln des Datenverkehrs des nach IEEE 802.1Q ersten einfach markierten VLAN (V1) über das erste zweifach markierte VLAN (T1) zwischen der ersten Netzweiche (32) und der zweiten Netzweiche (34) über den Rückwandbus (62).

8. Das Betriebsverfahren nach Anspruch 7 für ein Automatisierungssystem nach einem der Ansprüche 3 bis 4, dass ferner die Schritte aufweist:
Etablieren eines nach IEEE 802.1Q einfach markierten VLAN (V3) zwischen der ersten Steuereinheit (22) und der dritten Steuereinheit (26) über den Rückwandbus (62), über das die erste Steuereinheit (22) mit der dritten Steuereinheit (26) kommunizieren und diese steuern kann,
Etablieren eines nach IEEE 802.1ad zweiten zweifach markierten VLAN (T2) zwischen der ersten Netzweiche (32) und der dritten Netzweiche (36) über den Rückwandbus (62),
Übermitteln des Datenverkehrs des nach IEEE 802.1Q zweiten einfach markierten VLAN (V2) über das zweite zweifach markierte VLAN (T2) zwischen der ersten Netzweiche (32) und der dritten Netzweiche (36) über den Rückwandbus (62).

9. Das Betriebsverfahren nach einem der Ansprüche 7 bis 8 für ein Automatisierungssystem nach Anspruch 5, dass ferner die Schritte aufweist:
Etablieren eines nach IEEE 802.1Q einfach markierten VLAN (V3) zwischen der ersten Steuereinheit (22) und der vierten Steuereinheit (28) über den Rückwandbus (62), über das die erste Steuereinheit (22) mit der vierten Steuereinheit (28) kommunizieren und diese steuern kann.

10. Ein Computerprogrammprodukt, das eingerichtet ist, ein Automatisierungssystem 1 nach einem der Ansprüche 1 bis 6 so zu steuern, dass eines der Betriebsverfahren nach einem der Ansprüche 7 bis 9 ausgeführt wird.

## Claims

1. Automation system (1), having:
a backplane bus (62),
a first assembly (2), and
a second assembly (4),
**characterised in that**
the first assembly (2) comprises:
- a first control unit (22), which is designed to control and monitor the first assembly (2) and to adopt the function of a master control unit,
- a first communication interface (44), which can be connected to a first segment of a train control and management system network (14),
- a second communication interface (45), which is connected to the backplane bus (62),
- a first network switch (32), which connects the first communication interface (42), the second communication interface (45) and the first control unit (22) to one another in such manner that data communication can take place in accordance with the Ethernet protocol,
the second assembly (4) comprises:
- a second control unit (24), which is designed to control and monitor the second assembly (4),
- a third communication interface (46), which can be connected to a second train control and management system network (14) segment of the train control and management system network (14),
- a fourth communication interface (47), which is connected to the backplane bus (62),
- a second network switch (34), which is designed to connect the third communication interface (46), the fourth communication interface (47) and the second control unit (24) to one another in such manner that data communication takes place in accordance with the Ethernet protocol,
wherein
- the first network switch (32) and the second network switch (34) are designed to establish and process a single tagged VLAN according to IEEE 802.1Q and to form and process a double tagged VLAN (T1) according to IEEE 802.1ad,
- the train control and management network (14) forms a first single tagged VLAN (V1) in accordance with IEEE 892.1Q, to which the first control unit (22) can be connected as a terminal device of the train control and management network (14),
- between the first control unit (22) and the second control unit (24) a single VLAN (V3) according to IEEE 892.1Q is established by way of the backplane bus (62), via which the first control unit (22) can communicate with and control the second control unit (24), and
- a first double tagged VLAN (T1) according to IEEE 802.1ad is established between the first control unit (22), the first network switch (32) and the second network switch (34).

2. The automation system (1) according to Claim 1, wherein
- the first segment of the train control and management system network (14) consists of an individual terminal device (18) of the train control and management system network (14), or of a sub-network by way of which several terminal devices (18) of the train control and management system network (14) are connected, and
- the second segment of the train control and management system network (14) consists of an individual terminal device (18) of the train control and management system network (14), or of a sub-network by way of which several terminal devices (18) of the train control and management system network (14) are connected.

3. The automation system according to either of Claims 1 and 2, wherein the first assembly further comprises:
- a fifth communication interface (42) which can be connected to a first segment of a communication interface (12), which forms a second single tagged VLAN (V2) in accordance with IEEE 892.1Q, to which the first control unit (22) can be connected as a terminal device,
and the automation system (1) further comprises a third assembly (6), such that the third assembly (6) comprises:
- a third control unit (26), which is designed to control and monitor the third assembly (6),
- a sixth communication interface (48), which can be connected to a second segment of the communication network (12),
- a seventh communication interface (49), which is connected to the backplane bus (62),
- a third network switch (36), which connects the sixth communication interface (48), the seventh communication interface (49) and the third control unit (26) to one another in such manner that data communication can take place in accordance with the Ethernet protocol,
wherein
- between the first control unit (22) and the third control unit (26), by way of the backplane bus (62) the single tagged VLAN (V3) according to IEEE 802.1Q is established, via which the first control unit (22) can communicate with and control the third control unit (26), and
- between the first network switch (32) and the third network switch (36), a second tagged VALN (T2) according to IEEE 802.1ad is established by way of the backplane bus (62).

4. The automation system (1) according to Claim 3, wherein:
- the first segment of the communication network (12) consists of an individual terminal device (16) of the communication network (12) or of a sub-network by way of which several terminal devices (16) of the communication network (12) are connected, and
- the second segment of the communication network (12) consists of an individual terminal device (16) of the communication network (12) or of a sub-network by way of which several terminal devices (16) of the communication network (12) are connected.

5. The automation system (1) according to any of Claims 1 to 4, such that the automation system (1) comprises a fourth assembly (8), wherein the fourth assembly (8) comprises:
- a fourth control unit (28), which is designed to control and monitor the fourth assembly (8) and which serves as a terminal device for a CAN bus,
- an eighth communication interface (40), which can be connected to a first segment of a CAN bus and to the fourth control unit (28),
- a ninth communication interface (50), which is connected to the backplane bus (62),
- a fourth network switch (36), which connects the ninth communication interface (50) and the fourth control unit (28) to one another in such manner that data communication according to the Ethernet protocol can take place,
- wherein by way of the backplane bus (62) the single tagged VLAN (V3) according to IEEE 802.1Q between the first control unit (22) and the fourth control unit (28) is established, via which the first control unit (22) can communicate with and control the fourth control unit (28).

6. The automation system (1) according to any of Claims 1 to 5, wherein the first control unit (22) or the second control unit (24) is designed to establish a second double tagged VLAN according to IEEE 802.1ad.

7. Operating method for an automation system according to either of Claims 1 or 2, which method comprises the following steps:
- establishing by way of the backplane bus (62) a single tagged VLAN (V3) according to IEEE 802.1Q between the first control unit (22) and the second control unit (24), via which the control unit (22) can communicate with and control the control unit (24),
- establishing by way of the backplane bus (62) a first double tagged VLAN (Y1) according to IEEE 802.1ad between the first network switch (32) and the second network switch (34),
- transmitting by way of the backplane bus (62) the data traffic of the first single tagged VLAN (V1) according to IEEE 802.1Q via the first double tagged VLAN (T1) between the first network switch (32) and the second network switch (34).

8. The operating method according to Claim 7 for an automation system according either of Claims 3 or 4, which further comprises the steps:
- establishing by way of the backplane bus (62) a single tagged VLAN (V3) according to IEEE 802.1Q between the first control unit (22) and the third control unit (26), via which the first control unit (22) can communicate with and control the third control unit (26),
- establishing by way of the backplane bus (62) a second tagged VLAN (T2) according to IEEE 892.1ad between the first network switch (32) and the third network switch (36),
- transmitting by way of the backplane bus (62) the data traffic of the second single tagged VLAN (V2) according to IEEE 802.1Q via the second double tagged VLAN (T2) between the first network switch (32) and the third network switch (36).

9. The operating method according to either of Claims 7 or 8 for an automation system according to Claim 5, which method further comprises the step:
- establishing by way of the backplane bus (62) a single tagged VLAN (V3) according to IEEE 802.1Q between the first control unit (22) and the fourth control unit (28), via which the first control unit (22) can communicate with and control the fourth control unit (28).

10. A computer program product, which is designed to control an automation system (1) according to any of Claims 1 to 6 in such manner that one of the operating methods according to any of Claims 7 to 9 is carried out.

## Revendications

1. Système (1) d'automation qui a :
un bus (62) de fond de panier,
un premier composant (2) et
un deuxième composant (4),
**caractérisé en ce que** le premier composant (2) a :
une première unité (22) de commande, qui est agencée pour commander et pour contrôler le premier composant (2) et pour prendre en charge, pour le système (1) d'automatisation, la fonction d'une unité de commande supérieure hiérarchiquement,
une première interface (44) de communication, qui peut être reliée à un premier segment d'un réseau (14) de système, de commande et de gestion de train,
une deuxième interface (45) de communication, qui est reliée au bus (62) de fond de panier,
un premier aiguillage (32) de réseau, qui relie la première interface (42) de communication, la deuxième interface (45) de communication et la première unité (22) de commande entre elles, de manière à pouvoir effectuer une communication de données suivant la programme Ethernet,
le deuxième composant (4) a :
deuxième unité (24) de commande, qui est agencée pour commander et contrôler le deuxième composant (4),
une troisième interface (46) de communication, qui peut être reliée à un deuxième segment du réseau (14) du système de commande et de gestion de train du réseau (14) du système de commande et de gestion de train,
une quatrième interface (47) de communication, qui est reliée au bus (62) de fond de panier,
un deuxième aiguillage (34) de réseau, qui est agencé pour relier la troisième interface (46) de communication, la quatrième interface (47) de communication et la deuxième unité (24) de commande entre elles, de manière à pouvoir effectuer une communication de données suivant la programme Ethernet, dans lequel le premier aiguillage (32) de réseau et le deuxième aiguillage (34) de réseau sont agencés pour établir et pour traiter un VLAN marqué simplement suivant IEEE 802.1Q et pour former et pour traiter un VLAN (T1) marqué deux fois suivant IEEE 802.1ad,
le réseau (14) de commande et de gestion de train forme un premier VLAN (V1) marqué simplement, auquel la première unité (22) de commande peut être raccordée comme dispositif terminal du réseau (14) de commande et de gestion de train,
entre la première unité (22) de commande et la deuxième unité (24) de la commande est établi, par l'intermédiaire du bus (62) de fond de panier, un VLAN (V3) marqué simplement suivant IEEE 802.1Q, par lequel l'unité (22) de commande peut communiquer avec la deuxième unité (22) de commande et la commander, et
entre la première unité (22) de commande, le premier aiguillage (32) de réseau et le deuxième aiguillage (34) de réseau est, par le bus (62) de fond de panier, établi un premier VLAN (T1) marqué deux fois, suivant IEEE 802.1ad.

2. Système (1) d'automatisation suivant la revendication 1, dans lequel
le premier segment du réseau (14) du système de commande et de gestion de train est constitué d'un dispositif (18) terminal individuel du réseau (14) du système de commande et de gestion de train ou d'un réseau partiel, par lequel plusieurs dispositifs (18) terminaux du réseau (14) du système de commande et de gestion de train sont raccordés, et
le deuxième segment du réseau (14) du système de commande et de gestion de train est constitué d'un dispositif (18) terminal individuel du réseau (14) du système de commande et de gestion de train ou d'un réseau partiel, par lequel plusieurs dispositifs (18) terminaux du réseau (14) du système de commande et de gestion de train sont raccordés.

3. Système (1) d'automatisation suivant l'une des revendications 1 à 2 dans lequel
le premier composant a en outre :
une cinquième interface (42) de communication, qui peut être reliée à un premier segment d'un réseau (12) de communication, qui forme un deuxième VLAN 5 (V2) marqué une fois suivant IEEE 802.1Q, auquel la première unité (22) de commande peut être raccordée comme dispositif terminal, et le système (1) d'automatisation a un troisième composant (6),
dans lequel le troisième composant (6) a :
une troisième unité (26) de commande, qui est agencée pour commander et contrôler le troisième composant (6),
une sixième interface (48) de communication, qui peut être reliée à un deuxième segment du réseau (12) de communication,
une septième interface (49) de communication, qui est reliée au bus (62) de fond de panier,
un troisième aiguillage (36) de réseau, qui relie entre elles la sixième interface (48) de communication, la septième interface (49) de communication et la troisième unité (26) de commande de manière à pouvoir effectuer une communication de données suivant le programme Ethernet,
dans lequel entre la première unité (22) de commande et la troisième unité (26) de la commande est, par le bus (62) de fond de panier, établi le VLAN (V3) marqué une fois suivant IEEE 802.1Q, par lequel la première unité (22) de commande peut communiquer avec la troisième unité (26) de commande et la commander, et
entre le premier aiguillage (32) de réseau et le troisième aiguillage (36) de réseau est, par le bus (62) de fond de panier, établi un deuxième VLAN (T2) marqué deux fois suivant IEEE 802.1ad.

4. Système (1) d'automatisation suivant la revendication 3, dans lequel
le premier segment du réseau (12) de communication est constitué d'un dispositif (16) terminal individuel du réseau (12) de communication ou d'un réseau partiel, par lequel plusieurs dispositifs (16) terminaux du réseau (12) de communication sont raccordés, et
le deuxième segment du réseau (12) de communication est constitué d'un dispositif (16) terminal individuel du réseau (12) de communication ou d'un réseau partiel, par lequel plusieurs dispositifs (16) terminaux du réseau (12) de communication sont raccordés.

5. Système (1) d'automatisation suivant l'une des revendications 1 à 4, dans lequel le système (1) d'automatisation a un quatrième composant (8),
dans lequel le quatrième composant (8) a :
une quatrième unité (28) de commande, qui est agencée pour commander et pour contrôler le quatrième composant (8) et qui sert d'appareil terminal pour un bus CAN,
une huitième interface (40) de communication, qui peut être reliée à un premier segment d'un bus CAN et de la quatrième unité de commande,
une neuvième interface de communication, qui est reliée au bus (62) de fond de panier,
un quatrième aiguillage (36) de réseau, qui relie entre elles la neuvième interface (50) de communication et la quatrième unité (28) de commande de manière à pouvoir effectuer une communication de données suivant le programme Ethernet,
dans lequel entre la première unité (22) de commande et la quatrième unité (28) de commande est, par le bus (62) de fond de panier, établi le VLAN (V3) marqué une fois suivant IEEE 802.1Q, par lequel la première unité (22) de commande peut communiquer avec la quatrième unité (28) de commande et la commander.

6. Système (1) d'automatisation suivant l'une des revendications 1 à 5, dans lequel la première unité (22) de commande ou la deuxième unité (24) de commande sont agencées pour établir un deuxième VLAN marqué deux fois suivant IEEE 802.1ad.

7. Procédé pour faire fonctionner un système d'automatisation suivant l'une des revendications 1 à 2 ,qui comprend les stades :
établissement d'un VLAN (V3) marqué une fois suivant IEEE 802.1Q entre la première unité (22) de commande et la deuxième unité (24) de commande par l'intermédiaire du bus (62) de fond de panier, par lequel l'unité (22) de commande peut communiquer avec l'unité (24) de commande et la commander,
établissement d'un premier VLAN (T1) marqué deux fois suivant IEEE 802.1ad entre le premier aiguillage (32) du réseau et le deuxième aiguillage (34) du réseau par l'intermédiaire du bus (62) de fond de panier,
transmission du trafic de données du premier VLAN (V1) marqué une fois suivant IEEE 802.1Q, par l'intermédiaire du premier VLAN (T1) marqué deux fois, entre le premier aiguillage (32) du réseau et le deuxième aiguillage (34) du réseau par l'intermédiaire du bus (62) de fond de panier.

8. Procédé suivant la revendication 7, pour un système d'automatisation suivant l'une des revendications 3 à 4, qui comprend en outre les stades :
établissement d'un VLAN (V3) marqué une fois suivant IEEE 802.1Q entre la première unité (22) de commande et la troisième unité (26) de commande par l'intermédiaire du bus (62) de fond de panier, par lequel la première unité (22) de commande peut communiquer avec la troisième unité (26) de commande et la commander,
établissement d'un deuxième VLAN (T2) marqué deux fois suivant IEEE 802.1ad entre le premier aiguillage (32) du réseau et le troisième aiguillage (36) du réseau par l'intermédiaire du bus (62) de fond de panier,
transmission du trafic de données du deuxième VLAN (V2) marqué une fois suivant IEEE 802.1Q, par l'intermédiaire du deuxième VLAN (T2) marqué deux fois, entre le premier aiguillage (32) du réseau et le troisième aiguillage (36) du réseau par l'intermédiaire du bus (62) de fond de panier.

9. Procédé suivant l'une des revendications 7 à 8, pour un système d'automatisation suivant la revendication 5, qui comprend en outre le stade :
établissement d'un VLAN (V3) marqué une fois suivant IEEE 802.1Q entre la première unité (22) de commande et la quatrième unité (28) de commande par l'intermédiaire du bus (62) de fond de panier, par lequel la première unité (22) de commande peut communiquer avec la quatrième unité (28) de commande et la commander.

10. Produit de programme d'ordinateur, qui est agencé pour commander un système (1) d'automatisation suivant l'une des revendications 1 à 6, de manière à effectuer un procédé suivant l'une des revendications 7 à 9.
